# EUROPÄISCHE PATENTANMELDUNG

(11) **EP 2 332 625 A2**
(43) Veröffentlichungstag der Anmeldung: **15.06.2011**
(21) Anmeldenummer: 10015080.4
(22) Anmeldetag: 29.11.2010
(51) Int. Cl.: B01D 17/02

(54) **Flüssigkeitsabscheider**

(30) Priorität: 10.12.2009 DE 102009057499
(71) Anmelder: Mall GmbH, 78166 Donaueschingen-Pfohren (DE)
(72) Erfinder: Ummenhofer, Michael, 78048 Villingen-Schwenningen (DE); Mauz, Clemens, 78166 Donaueschingen (DE)
(74) Vertreter: Patentanwälte Westphal, Mussgnug & Partner

(57) **Zusammenfassung**

Die Erfindung betrifft einen Flüssigkeitsabscheider, insbesondere zum Trennen eines Gemischs aus Leichtflüssigkeit und Schwerflüssigkeit, mit einem Behälter (12), der einen Zulauf (20) und einen Ablauf (30) aufweist, wobei der Zulauf (20) und der Ablauf (30) als Tauchleitung ausgebildet sind, wobei der Zulauf (20) und/oder der Ablauf (30) als Tauchrohr (22, 32) ausgebildet sind, wobei an dem freien Ende des Tauchrohrs (22, 32) umlaufend ein erstes Umlenkelement (40) angeordnet ist und beabstandet zu dem ersten Umlenkelement (40) wenigstens ein zweites Umlenkelement (50) angeordnet ist.

## Beschreibung

Die Erfindung betrifft einen Flüssigkeitsabscheider gemäß dem Oberbegriff des Patentanspruchs 1.

Bekannt sind Flüssigkeitsabscheider, insbesondere zum Trennen eines Gemischs aus Leichtflüssigkeit und Schwerflüssigkeit, mit einem Behälter, der einen Zulauf und einen Ablauf aufweist, wobei der Zulauf und der Ablauf als Tauchleitung ausgebildet sind. Derartige Flüssigkeitsabscheider können ohne Fremdenergie betrieben werden, da einerseits der Zulauf höher angeordnet ist als der Ablauf und aufgrund dieses Höhenunterschieds zwischen Zulauf und Ablauf bei zulaufender Flüssigkeit ohne Verwendung einer Pumpe Flüssigkeit aus dem Flüssigkeitsabscheider ablaufen kann und andererseits das Gemisch aus Leichtflüssigkeit und Schwerflüssigkeit in den unteren Bereich des Behälters durch den als Tauchleitung ausgebildeten Zulauf zugeführt wird und die Abtrennung von Leichtflüssigkeit und Schwerflüssigkeit primär durch den Dichteunterschied erfolgt. Die Leichtflüssigkeit steigt an die Oberfläche, während sich die Schwerflüssigkeit im unteren Bereich des Behälters sammelt, sodass über den Ablauf, der ebenfalls als Tauchleitung ausgebildet ist, lediglich die Schwerflüssigkeit aus dem Behälter abfließt, während sich die Leichtflüssigkeit an der Oberfläche sammelt und von der Oberfläche auf verschiedenste Art und Weise entfernt werden kann.

Von großer Bedeutung für die Effizienz der Trennung von Leichtflüssigkeit und Schwerflüssigkeit ist die Größe der Leichtflüssigkeitstropfen, die der Auftriebskraft und der Reibungskraft unterliegen. Das Koagulieren der Tröpfchen verbessert diesen Effekt. Eine Koagulierung findet statt, wenn bspw. aufgrund von kinetischer Energie die Oberflächenspannung der Tröpfchen überwunden wird, wenn bspw. durch Erhöhung der Aufenthaltszeit in den vorgegebenen Geometrien die Oberflächenspannung über die Zeit abgeleitet wird oder auch bspw. durch eine Vergrößerung der inneren Oberfläche einer durchströmten Geometrie.

Als Aufgabe liegt der Erfindung zugrunde, einen Flüssigkeitsabscheider bereitzustellen, welcher eine verbesserte Koagulierung und damit einen verbesserten Auftrieb der Leichtflüssigkeitstropfen aufweist.

Die Aufgabe wird erfindungsgemäß gelöst durch einen Flüssigkeitsabscheider mit den Merkmalen des Patentanspruchs 1.

Vorteilhafte Ausgestaltungen und Weiterbildungen der Erfindung sind in den Unteransprüchen angegeben.

Der erfindungsgemäße Flüssigkeitsabscheider, insbesondere zum Trennen eines Gemischs aus Leichtflüssigkeit und Schwerflüssigkeit, mit einem Behälter, der einen Zulauf und einen Ablauf aufweist, wobei der Zulauf und der Ablauf als Tauchleitung ausgebildet sind, zeichnet sich dadurch aus, dass der Zulauf und/oder der Ablauf als Tauchrohr ausgebildet sind, wobei an dem freien Ende des Tauchrohrs umlaufend ein erstes Umlenkelement angeordnet ist und beabstandet zu dem ersten Umlenkelement wenigstens ein zweites Umlenkelement angeordnet ist. Durch die Umlenkelemente wird das durch das Zulaufrohr zuströmende oder in Richtung auf den Ablauf abströmende Flüssigkeitsgemisch umgelenkt und verwirbelt, sodass die Koagulierung verbessert wird. Wesentlich ist, dass der Zulauf und/oder der Ablauf als Tauchrohr ausgebildet sind, d. h. beabstandet von der Behälterwand in den Behälter münden, wobei das Tauchrohr beliebigen Querschnitt aufweisen kann, und das erste Umlenkelement um das Tauchrohr angeordnet ist.

Gemäß einer besonders bevorzugten Ausführungsform der Erfindung sind das erste Umlenkelement und das wenigstens eine zweite Umlenkelement derart angeordnet, dass die Strömung durch die Umlenkelemente im Wesentlichen quer zur Strömung durch den Zulauf und/oder Ablauf abgelenkt wird, um die Verwirbelung der Flüssigkeit zu vergrößern und auf diese Weise wiederum den Koagulationseffekt zu verbessern.

Die Koagulierung wird weiterhin dadurch verbessert, wenn vorzugsweise das erste Umlenkelement und das wenigstens eine zweite Umlenkelement derart angeordnet sind, dass die Strömung durch die Umlenkelemente im Wesentlichen radial in alle Richtungen abgelenkt wird, wobei durch das Tauchrohr des Zulaufs und/oder des Ablaufs eine axiale Richtung definiert ist.

In günstiger Weise wird die Strömungsführung beeinflusst, wenn gemäß einer vorteilhaften Ausführungsform das erste Umlenkelement und das wenigstens eine zweite Umlenkelement im Wesentlichen parallel zueinander ausgerichtet sind, was zudem einen besonders einfachen konstruktiven Aufbau ermöglicht.

Ein guter Koagulationseffekt ergibt sich, wenn gemäß einer bevorzugten Ausführungsform der Erfindung zwei bis zehn, besonders bevorzugt zwei bis vier zweite Umlenkelemente vorhanden sind, an welchen die Flüssigkeit verwirbelt.

Vorzugsweise sind das erste Umlenkelement und/oder das wenigstens eine zweite Umlenkelement plattenförmig ausgebildet, um einen einfachen Fertigungsprozess zu ermöglichen.

Gemäß einer bevorzugten Ausführungsform der Erfindung sind das erste Umlenkelement und/oder das wenigstens eine zweite Umlenkelement kegelförmig ausgebildet, wobei im Falle, dass das erste Umlenkelement und das zweite Umlenkelement kegelförmig ausgebildet sind, die Kegel derart ausgerichtet sind, dass sie entweder im Wesentlichen parallel zueinander ausgebildet oder dass ihre Basisflächen einander zugewandt sind. Auch auf diese Weise werden verschiedene Verwirbelungen in der Flüssigkeit erzeugt, welche die Koagulierung begünstigen.

Vorzugsweise sind das erste Umlenkelement und/oder das wenigstens eine zweite Umlenkelement rotationssymmetrisch ausgebildet, was den Fertigungsprozess vereinfacht.

Gemäß einer bevorzugten Ausführungsform der Erfindung weist wenigstens eines der Umlenkelemente an seinem Außenrand einen umlaufenden Rand auf, der im Wesentlichen senkrecht zur Achse des Tauchrohres verläuft, um insbesondere bei gegen die Achse des Tauchrohrs geneigten Umlenkelementen zusätzlich Verwirbelungen zu erzeugen.

Vorzugsweise weist wenigstens das dem ersten Umlenkelement zugewandte zweite Umlenkelement der zweiten Umlenkelemente eine zentrale Öffnung auf, welche vorzugsweise etwa dem Durchmesser des Tauchrohres entspricht. Auf diese Weise wird ein Teil der Strömung in Verlängerung des Tauchrohres weitergeleitet und am Rande der zentralen Öffnung zusätzliche Verwirbelungen erzeugt, die die Koagulierung begünstigen.

Gemäß einer bevorzugten Ausführungsform der Erfindung weist wenigstens eines der Umlenkelemente Bohrungen auf, welche vorzugsweise am Außenrand der Umlenkelemente angeordnet sind. Die Bohrungen können jedoch auch über die gesamte Fläche der Umlenkelemente verteilt angeordnet sein. Wichtig ist, dass durch die Bohrungen zusätzliche Verwirbelungen erzeugt werden, die die Koagulierung weiter begünstigen.

Vorzugsweise kann zu diesem Zweck auch wenigstens eines der Umlenkbleche als Lochblech ausgebildet sein.

Vorteilhaft auf den Effekt der Koagulierung wirkt sich auch aus, wenn gemäß einer bevorzugten Ausführungsform der Erfindung wenigstens eines der Umlenkelemente Oberflächenprägungen und/oder eine Oberflächenbeschichtung aufweist.

Der Außendurchmesser des ersten Umlenkelements und/oder des wenigstens einen zweiten Umlenkelements entspricht vorzugsweise etwa 1,5 bis 4 mal dem Durchmesser des Tauchrohrs. Der Abstand zwischen dem ersten Umlenkelement und dem wenigstens einen zweiten Umlenkelement entspricht vorteilhafterweise etwa dem Durchmesser des Tauchrohrs.

Gemäß einer bevorzugten Ausführungsform der Erfindung sind die Durchmesser der Umlenkelemente unterschiedlich ausgebildet, um auf diese Weise zusätzliche Verwirbelungen zu erzeugen, die die Koagulierung verbesssern.

Die Erfindung wird anhand der nachfolgenden Figuren ausführlich erläutert.

Es zeigt
- Fig. 1: eine perspektivische Ansicht eines Flüssigkeitsabscheiders mit erfindungsgemäßem ersten und zweiten Umlenkelement,
- Fig. 2: einen Axialschnitt durch das Tauchrohr des Zulaufs des Flüssigkeitsabscheiders gemäß Fig. 1,
- Fig. 3: einen Axialschnitt durch das Tauchrohr gemäß einem weiteren Ausführungsbeispiel,
- Fig. 4: einen Axialschnitt durch das Tauchrohr gemäß einem weiteren Ausführungsbeispiel,
- Fig. 5: einen Axialschnitt durch das Tauchrohr gemäß einem weiteren Ausführungsbeispiel,
- Fig. 6: einen Axialschnitt durch das Tauchrohr gemäß einem weiteren Ausführungsbeispiel,
- Fig. 7: einen Axialschnitt durch das Tauchrohr gemäß einem weiteren Ausführungsbeispiel,
- Fig. 8: einen Axialschnitt durch das Tauchrohr gemäß einem weiteren Ausführungsbeispiel,
- Fig. 9: einen Axialschnitt durch das Tauchrohr gemäß einem weiteren Ausführungsbeispiel,
- Fig. 10: einen Axialschnitt durch das Tauchrohr gemäß einem weiteren Ausführungsbeispiel,
- Fig. 11: einen Axialschnitt durch das Tauchrohr gemäß einem weiteren Ausführungsbeispiel,
- Fig. 12: einen Axialschnitt durch das Tauchrohr gemäß einem weiteren Ausführungsbeispiel und
- Fig. 13: einen Axialschnitt durch das Tauchrohr gemäß einem weiteren Ausführungsbeispiel.

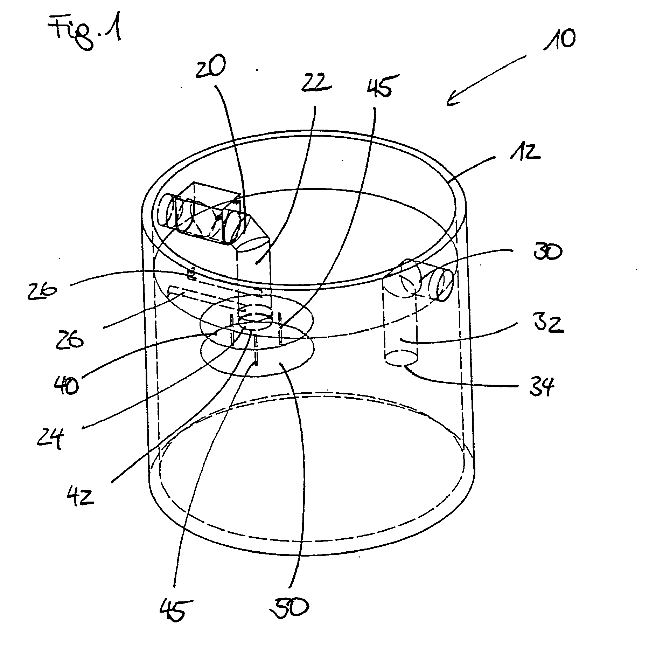

Figur 1 zeigt einen Flüssigkeitsabscheider 10 mit einem Behälter 12, in welchen ein Zulauf 20 und ein Ablauf 30 münden. Sowohl der Zulauf 20 als auch der Ablauf 30 sind als Tauchleitungen ausgebildet und weisen insbesondere jeweils ein Tauchrohr 22, 32 auf, welches sich ausgehend von dem Zulauf 20 bzw. dem Ablauf 30 nach unten in den Behälter 12 erstrecken und jeweils ein freies Ende 24, 34 aufweisen.

Grundsätzlich arbeiten derartige Flüssigkeitsabscheider 10 auf die folgende Art und Weise. Über den Zulauf 20 wird ein Gemisch aus Leichtflüssigkeit und Schwerflüssigkeit in den Behälter 12 eingeleitet, wobei die zugeführte Flüssigkeit unterhalb des Ruhewasserspiegels durch das freie Ende 24 des Tauchrohrs 22 einströmt. Die Leichtflüssigkeit steigt aufgrund ihrer geringeren Dichte an die Oberfläche, während die Schwerflüssigkeit sich im Bodenbereich des Behälters 12 sammelt. Da auch der Ablauf 30 als Tauchleitung ausgebildet ist, fließt über das Tauchrohr 32 die Schwerflüssigkeit aus dem Behälter 12 ab, während sich die Leichtflüssigkeit an der Oberfläche der Flüssigkeit sammelt und von der Oberfläche aus entfernt werden kann. Dabei ist es grundsätzlich möglich, den Zulauf 20 oder den Ablauf 30 lediglich durch ein entsprechend geformtes Leitblech gemeinsam mit der Wand des Behälters 12 als Tauchleitung auszubilden. Vorliegend sind der Zulauf 20 und der Ablauf 30 jedoch als Tauchrohr 22, 32 ausgebildet und erstrecken sich somit beabstandet von der Wand des Behälters 12 in den Innenraum des Behälters 12 nach unten hinein. Wie in Figur 1 erkennbar, wird der Zulauf 20 mittels zweier Streben 26 an der Innenwand des Behälters 12 befestigt. Gleiches ist auch für den Ablauf 30 möglich.

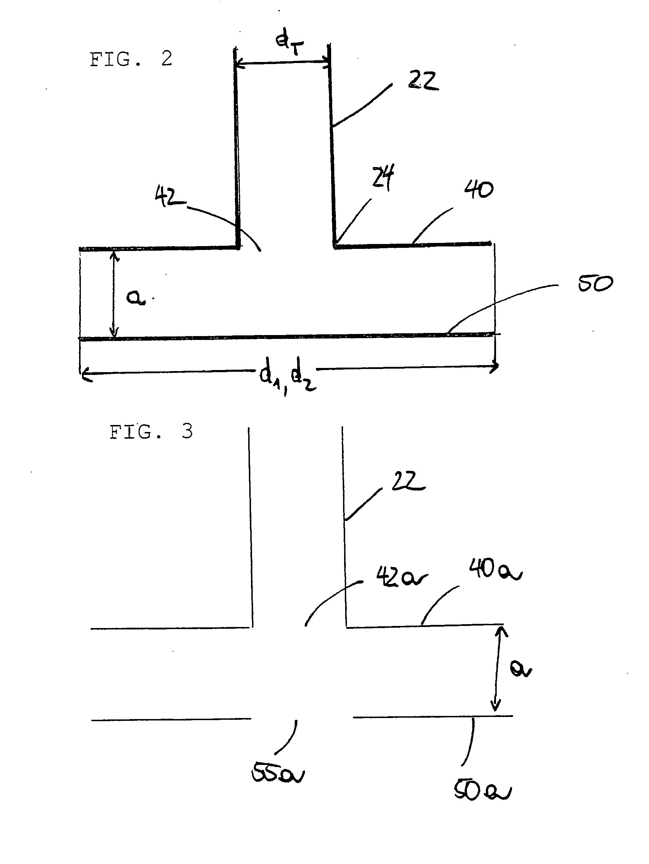

Um das Tauchrohr 22, 32, welches entweder das Tauchrohr 22 des Zulaufs 20 oder das Tauchrohr 32 des Ablaufs 30 oder auch beide Tauchrohre 22, 32 sein können, ist ein erstes Umlenkelement 40 und beabstandet dazu ein zweites Umlenkelement 50 angeordnet. Einen Axialschnitt durch das freie Ende 24 des Tauchrohrs 22 des Zulaufs zeigt Figur 2.

Das erste Umlenkelement 40 ist als plattenartiges Element ausgebildet. Insbesondere ist das erste Umlenkelement 40 kreisförmig mit einer zentrischen Öffnung 42 ausgebildet. Die zentrische Öffnung 42 weist dabei einen derartigen Durchmesser auf, dass sie das freie Ende 24 des Tauchrohrs 22 entweder umschließt oder auf Stoß an das freie Ende 24 des Tauchrohrs 22 angesetzt werden kann. Das zweite Umlenkelement 50 ist mittels dreier Verbindungsstifte 45, die im Wesentlichen senkrecht auf dem ersten Umlenkelement 40 und dem zweiten Umlenkelement 50 angeordnet sind, mit dem ersten Umlenkelement 40 in einem Abstand a verbunden. Der Abstand a entspricht dabei in etwa dem Durchmesser d_{T} des Tauchrohrs 22.

Das zweite Umlenkelement 50 ist ebenfalls als plattenartiges Element ausgebildet und wird in diesem Ausführungsbeispiel durch eine kreisförmige Platte mit einem Durchmesser d₂ gebildet. Das erste Umlenkelement 40 weist einen Durchmesser d₁ auf, wobei vorliegend die Durchmesser d₁, d₂ der Umlenkelemente 40, 50 im Wesentlichen identisch sind. Weiterhin sind die Durchmesser d₁, d₂ der Umlenkelemente 40, 50 im Wesentlichen dreimal so groß wie der Durchmesser des Tauchrohrs 22, können jedoch im Bereich von etwa 1,5 bis 4 mal der Durchmesser d_{T} des Tauchrohrs 22 liegen. Weiterhin können die Durchmesser d₁, d₂ der Umlenkelemente 40, 50 auch unterschiedlich groß ausgebildet sein.

Durch die Umlenkelemente 40, 50 wird insbesondere die Strömung derart abgelenkt, dass sie anschließend im Wesentlichen quer zur Strömung durch das Tauchrohr 22 des Zulaufs 20 in den Behälter 12 ausströmt. Dabei erfolgt die Strömung durch die Umlenkelemente 40, 50 im Wesentlichen radial in alle Richtungen, wobei durch das Tauchrohr 22 des Zulaufs 20 eine axiale Richtung definiert ist.

Eine alternative Ausführungsform zeigt Figur 3, bei welcher ein erstes Umlenkelement 40a dem Umlenkelement 40 gemäß Figur 2 entspricht, ein zweites Umlenkelement 50a in analoger Weise in einem Abstand a zu dem ersten Umlenkelement 40a angeordnet ist, wobei das zweite Umlenkelement 50a jedoch zusätzlich eine zentrische Öffnung 55a aufweist, deren Durchmesser etwa dem Durchmesser der zentrischen Öffnung 42a des ersten Umlenkelements 40a entspricht.

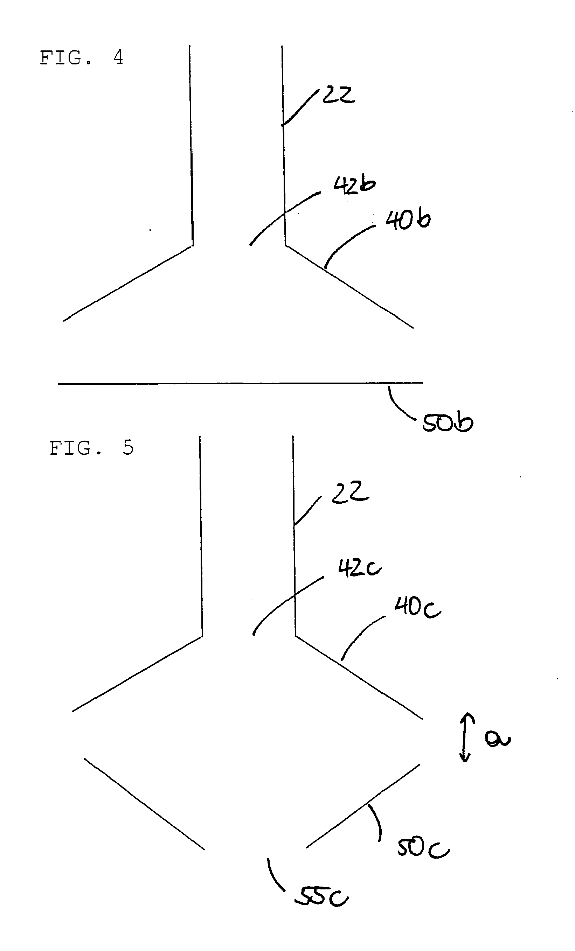

Ein weiteres Ausführungsbeispiel zeigt Figur 4, bei welchem das zweite Umlenkelement 50b als plattenförmiges Umlenkelement ausgebildet ist, während das erste Umlenkelement 40b sich ausgehend von einer zentrischen Öffnung 42b in Richtung auf das zweite Umlenkelement 50b hin kegelartig erweitert bis auf einen Außendurchmesser d₁, der im Wesentlichen dem Durchmesser d₂ des zweiten Umlenkelements 50b entspricht. Die Außendurchmesser d₁, d₂ der Umlenkelemente 40b, 50b können jedoch auch unterschiedlich ausgebildet sein.

Figur 5 zeigt ein weiteres Ausführungsbeispiel, bei welchem sowohl das erste Umlenkelement 40c als auch das zweite Umlenkelement 50c kegelförmig ausgebildet sind, wobei das erste Umlenkelement eine zentrische Öffnung 42c aufweist, welche an das freie Ende 24 des Tauchrohrs 20 anschließt, und das zweite Umlenkelement 50c ebenfalls eine zentrische Öffnung 55c aufweist, deren Durchmesser im Wesentlichen der zentrischen Öffnung 42 des ersten Umlenkelements 40c entspricht, und die beiden kegelförmigen Umlenkelemente 40c, 50c derart zueinander ausgerichtet sind, dass die Basisflächen der kegelförmigen Elemente einander zugewandt sind. Als Abstand a der beiden Umlenkelemente 40c, 50c wird der Abstand an ihren Außenrändern bezeichnet.

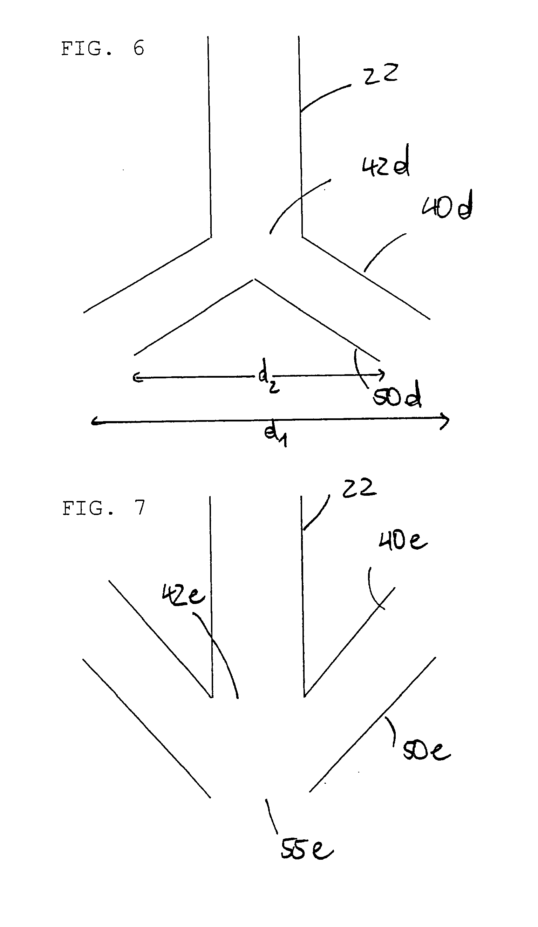

Figur 6 zeigt ein weiteres Ausführungsbeispiel, bei welchem das erste Umlenkelement 40d analog zu dem ersten Umlenkelement 40c gemäß Figur 5 ausgebildet ist, das zweite Umlenkelement 50d ebenfalls kegelförmig ausgebildet ist, wobei einerseits jedoch das zweite Umlenkelement 50d keine zentrische Öffnung aufweist und zudem das kegelförmige Element derart ausgerichtet ist, dass die Mantelflächen der kegelförmigen Elemente 40d, 50d im Wesentlichen parallel verlaufen. Zudem zeigt dieses Ausführungsbeispiel ein zweites Umlenkelement 50d, welches einen kleineren Durchmesser d₂ aufweist als das erste Umlenkelement 40d. Selbstverständlich können auch bei diesem Ausführungsbeispiel die Durchmesser d₁, d₂ im Wesentlichen gleich groß sein oder der Durchmesser d₁ des ersten Umlenkelementes 40d kleiner als der Durchmesser d₂ des zweiten Umlenkelementes 50d.

Figur 7 zeigt ein weiteres Ausführungsbeispiel, bei welchem sowohl das erste Umlenkelement 40e als auch das zweite Umlenkelement 50e im Wesentlichen kegelförmig ausgebildet sind und sowohl das erste Umlenkelement 40e eine zentrische Öffnung 42e als auch das zweite Umlenkelement 50e eine zentrische Öffnung 55e aufweisen, welche wiederum etwa gleichen Durchmesser aufweisen. Die Durchmesser der zentrischen Öffnungen 42e, 55e können aber auch unterschiedlich ausgebildet sein. In diesem Ausführungsbeispiel sind ebenfalls die beiden kegelförmigen Elemente parallel zueinander ausgerichtet, wobei sich die Kegel jedoch in Strömungsrichtung durch das Tauchrohr 22 des Zulaufs 20 verjüngen statt wie bei dem Ausführungsbeispiel gemäß Figur 6 sich in Richtung der Strömung durch den Zulauf 20 zu erweitern.

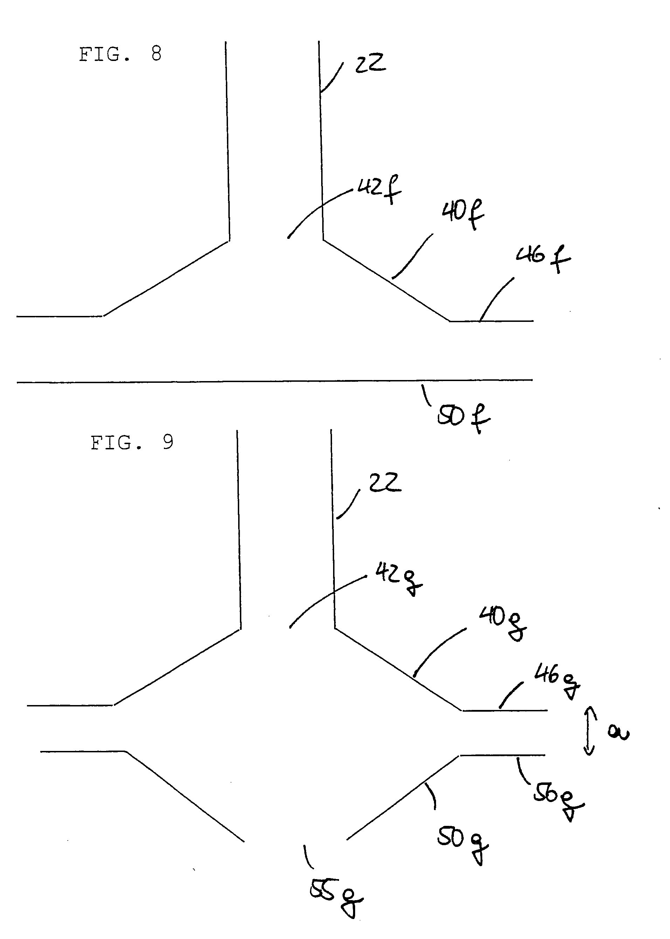

Figur 8 zeigt ein Ausführungsbeispiel, bei welchem das zweite Umlenkelement 50f im Wesentlichen als kreisförmiges plattenförmiges Element ausgebildet ist, während das erste Umlenkelement 40f sich ausgehend von der zentrischen Öffnung 42f zunächst im Wesentlichen kegelförmig erweitert, wobei am Außenrand des kegelförmigen Abschnitts ein umlaufender Rand 46f angeordnet ist, der in einer Ebene im Wesentlichen senkrecht zur Längsachse des Tauchrohrs 22 verläuft.

Figur 9 zeigt ein weiteres Ausführungsbeispiel, bei welchem sowohl das erste Umlenkelement 40g als auch das zweite Umlenkelement 50g einen kegelförmigen Abschnitt und eine zentrische Öffnung 42g, 55g aufweisen, wobei die kegelförmigen Abschnitte derart zueinander ausgerichtet sind, dass die Basisflächen einander zugewandt sind, sich somit das erste Umlenkelement 40g in Strömungsrichtung durch den Zulauf 20 erweitert, während sich das zweite Umlenkelement 55g in Strömungsrichtung durch den Zulauf 20 verjüngt. Weiterhin weisen sowohl das erste Umlenkelement 40g als auch das zweite Umlenkelement 50g an ihrem Außenrand der kegelförmigen Abschnitte einen umlaufenden Rand 46g, 56g auf, welche in einer Ebene liegen, die im Wesentlichen senkrecht zur Längsachse des Tauchrohrs 22 des Zulaufs 20 verläuft. Dabei sind die umlaufenden Ränder 46g, 56g in einem Abstand a beabstandet.

Es ist möglich, nicht nur ein einziges zweites Umlenkelement 50 vorzusehen, sondern mehrere, insbesondere zwei bis zehn, besonders bevorzugt zwei bis vier zweite Umlenkelemente 50.

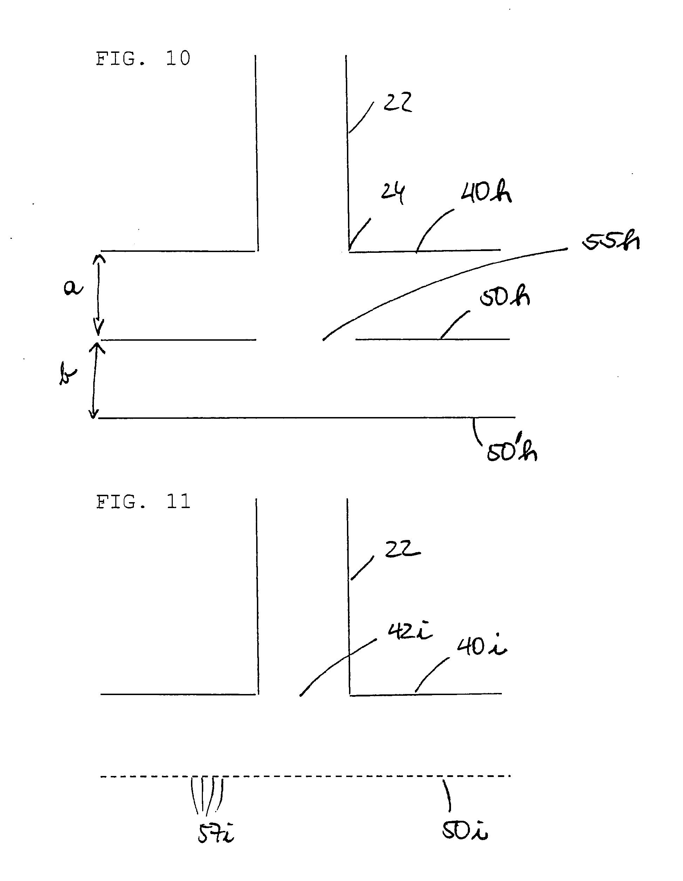

Figur 10 zeigt ein Ausführungsbeispiel für eine derartige Anordnung, bei welcher an dem freien Ende 24 des Tauchrohrs 22 ein erstes Umlenkelement 40h angeordnet ist, welches als kreisförmiges, plattenförmiges Element ausgebildet ist und eine zentrische Öffnung 42 aufweist, welche das freie Ende 24 des Tauchrohrs 22 umschließt. Ein zweites Umlenkelement 50h ist in einem Abstand a zu dem ersten Umlenkelement 40h angeordnet, wobei auch das zweite Umlenkelement 50h als kreisförmiges, plattenförmiges Element mit einer zentrischen Öffnung 55h ausgebildet ist. Zusätzlich ist in einem Abstand b zu dem zweiten Umlenkelement 50h ein weiteres zweites Umlenkelement 50'h angeordnet, insbesondere wiederum mittels nicht dargestellter Verbindungsstifte, welches als kreisförmiges, plattenförmiges Umlenkelement ohne zentrische Öffnung ausgebildet ist. Der Abstand b kann dabei dem Abstand a entsprechen, kann jedoch auch von diesem verschieden sein. Damit das weitere zweite Umlenkelement 50'h eine Auswirkung auf die Strömung durch das Tauchrohr 22 hat, ist es sinnvoll, zumindest eine Durchbrechung in dem zweiten Umlenkelement 50h, welches dem ersten Umlenkelement 40h am nächsten liegt, vorzusehen, wie es vorliegend in Form der zentrischen Öffnung 55h erfolgt ist. Die Durchbrechung kann jedoch auch in Form einer einzelnen oder mehreren an beliebiger Stelle des zweiten Umlenkelements 50h angeordneten Öffnungen oder in Form einer Vielzahl von kleinen Bohrungen vorliegen, wobei in einer Alternative das zweite Umlenkelement 50h auch in Form eines Lochblechs vorliegen kann.

Wie in Figur 11 dargestellt, ist es nicht zwingend erforderlich, dass Durchbrechungen nur in Form von zentrischen Öffnungen ausgebildet sind. Figur 11 zeigt ein Ausführungsbeispiel, bei welchem das erste Umlenkelement 40i als kreisförmiges, plattenförmiges Element mit einer zentrischen Öffnung 42 ausgebildet ist, während das zweite Umlenkelement 50i als plattenförmiges Element mit einer Vielzahl von Bohrungen 57i ausgebildet ist. Das zweite Umlenkelement 50i ist insbesondere als Lochblech ausgestaltet. Die Durchbrechungen 57i können auch lediglich am Außenrand des zweiten Umlenkelements 50i oder über die gesamte Fläche des Umlenkelements 50i verteilt angeordnet sein. Die Durchmesser der Durchbrechungen 57i sowie die geometrische Form der Durchbrechungen können beliebig variiert werden. Die entsprechenden Durchbrechungen 57i können selbstverständlich auch in dem ersten Umlenkelement 40i und dort zusätzlich oder dort ausschließlich angeordnet werden.

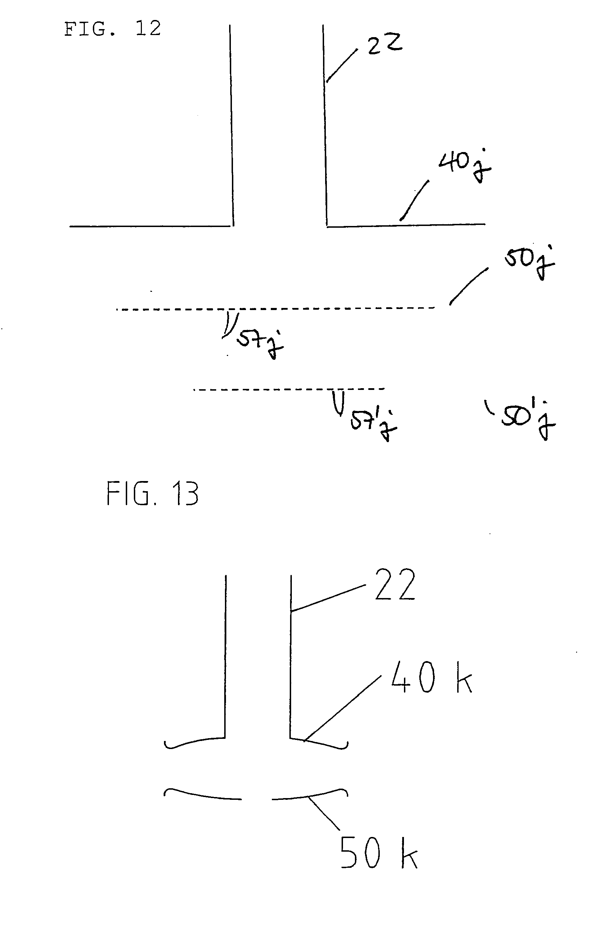

Figur 12 zeigt ein weiteres Ausführungsbeispiel, bei welchem beabstandet zu einem ersten kreisförmigen, plattenförmigen Umlenkelement 40j zwei weitere zweite Umlenkelemente 50j, 50'j angeordnet sind, welche jeweils als Lochblech mit Durchbrechungen 57j, 57'j ausgebildet sind. Zusätzlich zeigt Figur 12, dass die Durchmesser der Umlenkelemente 40j, 50j, 50'j mit zunehmendem Abstand von dem freien Ende 24 des Tauchrohrs 22 abnehmen. Denkbar wäre auch, dass sich die Durchmesser der Umlenkelemente 40j, 50j, 50'j oder ggf. weiterer zweiter Umlenkelemente mit zunehmendem Abstand vom freien Ende 24 des Tauchrohrs 22 vergrößern.

Figur 13 zeigt ein weiteres Ausführungsbeispiel, bei welchem das erste Umlenkelement 40k und das zweite Umlenkelement 50k geschwungen oder gewölbt ausgebildet sind, wobei die Wölbungen, wie in Figur 13 dargestellt, gegenläufig sein können, jedoch auch im Wesentlichen parallel zueinander ausgerichtet sein können.

Die einzelnen geometrischen Eigenschaften der einzelnen Umlenkelemente der zuvor beschriebenen Ausführungsbeispiele, wie insbesondere Durchmesser, Form, Vorhandensein von Durchbrechungen etc. können beliebig miteinander kombiniert werden.

Weiterhin kann in jedem Ausführungsbeispiel sowohl das erste Umlenkelement und/oder die weiteren zweiten Umlenkelemente mit Oberflächenprägungen, bspw. in Form von Rillen oder Noppen, ausgebildet werden und/oder eine Oberflächenbeschichtung tragen, wobei diese Strukturen zusätzlich Elemente darstellen, an welchen Verwirbelungen stattfinden können und somit die Koagulierung verbessert wird.

In den dargestellten Ausführungsbeispielen sind die Umlenkelemente rotationssymmetrisch ausgebildet. Es ist jedoch auch denkbar, dass das freie Ende 24 des Tauchrohrs 22 nicht zentral in dem ersten Umlenkelement 40 endet und die Umlenkelemente auch nicht zwingend rotationssymmetrisch ausgebildet sind. Wesentlich ist, dass das erste Umlenkelement das freie Ende 24 des Tauchrohrs 22 vollständig umschließt. Die Umlenkelemente können auch quadratisch, rechteckig, oval oder mit beliebiger Außenkontur ausgebildet sein. Auch die Durchbrechungen können beliebige Geometrie aufweisen.

Sämtliche der vorgenannten Ausgestaltungen von Umlenkelementen, die am freien Ende 24 des Zulaufs 20 angeordnet sind, können selbstverständlich auch an dem freien Ende 34 des Tauchrohrs 32 des Ablaufs 30 angeordnet werden.

### Bezugszeichenliste

- 10: Flüssigkeitsabscheider
- 12: Behälter

- 20: Zulauf
- 22: Tauchrohr
- 24: freies Ende
- 26: Strebe

- 30: Ablauf
- 32: Tauchrohr
- 34: freies Ende

- 40: erstes Umlenkelement
- 42: zentrische Öffnung
- 45: Verbindungsstift
- 50: zweites Umlenkelement

- 40a: erstes Umlenkelement
- 42a: zentrische Öffnung
- 50a: zweites Umlenkelement
- 55a: zentrische Öffnung

- 40b: erstes Umlenkelement
- 42b: zentrische Öffnung
- 50b: zweites Umlenkelement#
- 52b: zentrische Öffnung

- 40c: erstes Umlenkelement
- 42c: zentrische Öffnung
- 50c: zweites Umlenkelement
- 55c: zentrische Öffnung

- 40d: erstes Umlenkelement
- 42d: zentrische Öffnung
- 50d: zweites Umlenkelement
- 55e: zentrische Öffnung

- 40e: erstes Umlenkelement
- 42e: zentrische Öffnung
- 50e: zweites Umlenkelement
- 55e: zentrische Öffnung

- 40f: erstes Umlenkelement
- 42f: zentrische Öffnung
- 46f: Rand

- 40g: erstes Umlenkelement
- 42g: zentrische Öffnung
- 46g: Rand
- 50g: zweites Umlenkelement
- 55gc: zentrische Öffnung
- 56g: Rand

- 40h: erstes Umlenkelement
- 50h: zweites Umlenkelement
- 55h: zentrische Öffnung
- 50'h: zweites Umlenkelement

- 40i: erstes Umlenkelement
- 42i: zentrische Öffnung
- 50i: zweites Umlenkelement
- 57i: Durchbrechung

- 40j: erstes Umlenkelement
- 50j: zweites Umlenkelement
- 57j: Durchbrechung
- 50'j: zweites Umlenkelement
- 57'j: Durchbrechung

- 40k: erstes Umlenkelement
- 50k: zweites Umlenkelement

- a: Abstand
- b: Abstand
- d₁: Durchmesser
- d₂: Durchmesser
- d_{T}: Durchmesser

## Patentansprüche

1. Flüssigkeitsabscheider, insbesondere zum Trennen eines Gemischs aus Leichtflüssigkeit und Schwerflüssigkeit, mit einem Behälter (12), der einen Zulauf (20) und einen Ablauf (30) aufweist, wobei der Zulauf (20) und der Ablauf (30) als Tauchleitung ausgebildet sind,
**dadurch gekennzeichnet, dass** der Zulauf (20) und/oder der Ablauf (30) als Tauchrohr (22, 32) ausgebildet sind, wobei an dem freien Ende des Tauchrohrs (22, 32) umlaufend ein erstes Umlenkelement (40) angeordnet ist und beabstandet zu dem ersten Umlenkelement (40) wenigstens ein zweites Umlenkelement (50) angeordnet ist.

2. Flüssigkeitsabscheider nach Anspruch 1,
**dadurch gekennzeichnet, dass** das erste Umlenkelement (40) und das wenigstens eine zweite Umlenkelement (50) derart angeordnet sind, dass die Strömung durch die Umlenkelemente im wesentlichen quer zur Strömung durch den Zulauf (20) und/oder Ablauf (30) abgelenkt wird.

3. Flüssigkeitsabscheider nach einem der vorhergehenden Ansprüche,
**dadurch gekennzeichnet, dass** das erste Umlenkelement (40) und das wenigstens eine zweite Umlenkelement (50) derart angeordnet sind, dass die Strömung durch die Umlenkelemente (40, 50) im Wesentlichen radial in alle Richtungen abgelenkt wird, wobei durch das Tauchrohr (22, 32) des Zulaufs (20) und/oder des Ablaufs (30) eine axiale Richtung definiert ist.

4. Flüssigkeitsabscheider nach einem der vorhergehenden Ansprüche,
**dadurch gekennzeichnet, dass** das erste Umlenkelement (40) und das wenigstens eine zweite Umlenkelement (50) im Wesentlichen parallel zueinander ausgerichtet sind.

5. Flüssigkeitsabscheider nach einem der vorhergehenden Ansprüche,
**dadurch gekennzeichnet, dass** zwei bis zehn, bevorzugt zwei bis vier zweite Umlenkelemente (50) vorhanden sind.

6. Flüssigkeitsabscheider nach einem der vorhergehenden Ansprüche,
**dadurch gekennzeichnet, dass** das erste Umlenkelement (40) und/oder das wenigstens eine zweite Umlenkelement (50) plattenförmig ausgebildet sind.

7. Flüssigkeitsabscheider nach einem der vorhergehenden Ansprüche,
**dadurch gekennzeichnet, dass** das erste Umlenkelement und/oder das wenigstens eine zweite Umlenkelement kegelförmig ausgebildet sind, wobei im Falle, dass das erste Umlenkelement und das zweite Umlenkelement kegelförmig ausgebildet sind, die Kegel derart ausgerichtet sind, dass sie entweder im Wesentlichen parallel zueinander ausgebildet oder dass ihre Basisflächen einander zugewandt sind.

8. Flüssigkeitsabscheider nach einem der vorhergehenden Ansprüche,
**dadurch gekennzeichnet, dass** das erste Umlenkelement (40) und/oder das wenigstens eine zweite Umlenkelement (50) rotationssymmetrisch ausgebildet sind.

9. Flüssigkeitsabscheider nach einem der vorhergehenden Ansprüche,
**dadurch gekennzeichnet, dass** wenigstens eines der Umlenkelemente (40f) an seinem Außenrand einen umlaufenden Rand (46f) aufweist, der im Wesentlichen senkrecht zur Achse des Tauchrohrs (22) verläuft.

10. Flüssigkeitsabscheider nach einem der vorhergehenden Ansprüche,
**dadurch gekennzeichnet, dass** wenigstens das dem ersten Umlenkelement (40a) zugewandte zweite Umlenkelement (50a) der wenigstens einen zweiten Umlenkelemente eine zentrale Öffnung (55a) aufweist, welche vorzugsweise etwa dem Durchmesser des Tauchrohrs (22) entspricht.

11. Flüssigkeitsabscheider nach einem der vorhergehenden Ansprüche,
**dadurch gekennzeichnet, dass** wenigstens eines der Umlenkelemente (50i) Bohrungen (57i) aufweist, welche vorzugsweise am Außenrand der Umlenkelemente angeordnet sind.

12. Flüssigkeitsabscheider nach einem der vorhergehenden Ansprüche,
**dadurch gekennzeichnet, dass** wenigstens eines der Umlenkelemente (50i) als Lochblech ausgebildet ist.

13. Flüssigkeitsabscheider nach einem der vorhergehenden Ansprüche,
**dadurch gekennzeichnet, dass** wenigstens eines der Umlenkelemente Oberflächenprägungen und/oder eine Oberflächenbeschichtung aufweist.

14. Flüssigkeitsabscheider nach einem der vorhergehenden Ansprüche,
**dadurch gekennzeichnet, dass** der Außendurchmesser (d₁) des ersten Umlenkelements (40) und/oder des wenigstens einen zweiten Umlenkelements (50) etwa 1,5 bis 4 mal dem Durchmesser (d_{T}) des Tauchrohrs (22, 32) entspricht.

15. Flüssigkeitsabscheider nach einem der vorhergehenden Ansprüche,
**dadurch gekennzeichnet, dass** der Abstand (a, b) zwischen dem ersten Umlenkelement (40) und dem wenigstens einen zweiten Umlenkelement (50) etwa dem Durchmesser (d_{T}) des Tauchrohrs (22, 32) entspricht.

16. Flüssigkeitsabscheider nach einem der vorhergehenden Ansprüche,
**dadurch gekennzeichnet, dass** die Durchmesser (d₁, d₂) der Umlenkelemente (40, 50) unterschiedlich ausgebildet sind.
